(19) Europäisches Patentamt / European Patent Office / Office européen des brevets

(11) **EP 1 371 131 B1**

(12) **EUROPÄISCHE PATENTSCHRIFT**

(45) Veröffentlichungstag und Bekanntmachung des Hinweises auf die Patenterteilung:
**03.05.2017 Patentblatt 2017/18**

(21) Anmeldenummer: **02706679.4**

(22) Anmeldetag: **07.02.2002**

(51) Int Cl.:
*F02N 11/04* *(2006.01)*    *F02N 15/02* *(2006.01)*
*F02N 15/10* *(2006.01)*    *F02B 67/06* *(2006.01)*
*H02P 9/02* *(2006.01)*

(86) Internationale Anmeldenummer:
**PCT/DE2002/000445**

(87) Internationale Veröffentlichungsnummer:
**WO 2002/075914 (26.09.2002 Gazette 2002/39)**

(54) **VERFAHREN ZUR ERKENNUNG VON SCHLUPF BEI GENERATOR- UND STARTERGENERATOR-SYSTEMEN**

METHOD FOR DETECTING SLIP IN GENERATOR AND STARTER GENERATOR SYSTEMS

PROCEDE POUR DETECTER LE GLISSEMENT DANS DES SYSTEMES A GENERATEURS ET GENERATEURS DE DEMARRAGE

(84) Benannte Vertragsstaaten:
**DE ES FR GB IT SE**

(30) Priorität: **15.03.2001 DE 10112568**

(43) Veröffentlichungstag der Anmeldung:
**17.12.2003 Patentblatt 2003/51**

(73) Patentinhaber: **ROBERT BOSCH GMBH**
**70442 Stuttgart (DE)**

(72) Erfinder:
• **SCHERRBACHER, Klaus**
**73326 Reichenbach (DE)**
• **BECK, Markus**
**71711 Steinheim (DE)**

(56) Entgegenhaltungen:
**US-A- 6 029 512**

• **PATENT ABSTRACTS OF JAPAN vol. 1998, no. 09, 31. Juli 1998 (1998-07-31) & JP 10 094295 A (NISSAN MOTOR CO LTD), 10. April 1998 (1998-04-10)**
• **PATENT ABSTRACTS OF JAPAN vol. 008, no. 240 (M-336), 6. November 1984 (1984-11-06) & JP 59 119028 A (MAZDA KK), 10. Juli 1984 (1984-07-10)**

## Beschreibung

Technisches Gebiet

In Kraftfahrzeugen eingebaute Drehstrom-Generatoren werden direkt vom Fahrzeugmotor angetrieben. Der Antrieb wird im allgemeinen mit Riementrieben realisiert. An Riementriebe, seien es Keilriemen oder Keilrippenriemen werden hinsichtlich der Kraftübertragung hohe Anforderungen gestellt. Das Riemenmaterial muß eine weitreichende Biegefestigkeit aufweisen; ferner sollte im Laufe der Alterung die Längsdehnung möglichst gering sein, um Schlupf, verbunden mit übermäßiger Erwärmung und Riemenverschleiß am Riemen vorzubeugen.

Stand der Technik

Drehstrom-Generatoren, die über Normalkeilriemen vom Verbrennungsmotor aus angetrieben werden, werden fast ausschließlich mit einem Schwenkarm befestigt Ist der Schwenkarm um ein Schwenklager verdrehbar angeordnet, kann durch Schwenken des Generators die Keilriemenspannung bei aufgetretener Längung des Riemens nachjustiert und entsprechend nachgespannt werden. Die Nachstellung des Keilriemens erfolgt in der Regel zu bestimmten Inspektionsintervallen oder dann, wenn sich das Rutschen des Keilriemens auf den Riemenscheiben akustisch bemerkbar macht.

Der Antrieb eines Drehstrom-Generators in Kraftfahrzeugen kann auch über Keilrippenriemen (Poly-V-Riemen) erfolgen. Bei dieser Antriebsvariante ist der Drehstrom-Generator starr am Motorblock befestigt. Die zum Antrieb erforderliche, auf den Riemen aufzubringende Spannung wird mittels eines Riemenspanners, zum Beispiel ausgebildet als eine an dem Riemenrücken anstellbare Spannrolle, aufgebracht.

Je nach Größe des anzutreibenden Drehstrom-Generators werden zum Antrieb ein oder zwei Riemen eingesetzt, so daß zur Einstellung der erforderlichen Vorspannung des Riemens die Verwendung zweier an den Riemenrücken anstellbarer Spannrollen erforderlich ist, die je nach Längung getrennt nachgestellt werden müssen, sollte die erforderliche Riemenspannung zur Übertragung des Drehmomentes unterschritten werden und es zu Schlupf zwischen den Riemen und den Riemenscheiben kommen.

Bei heute in Kraftfahrzeugen eingesetzten Drehstrom-Generatoren, wie zum Beispiel Klauenpol-Generatoren treten aufgrund der hohen, durch Einsatz von elektronischen Generatorsteuerkomponenten am Generator erzielbaren Generatorausgangsleistungen hohe zu übertragende Antriebsmomente auf. Die hohen zu übertragenden Antriebsmomente können zu einem unzulässig hohen Schlupf am Riementrieb führen, der unbedingt zu vermeiden, zumindest aber zu begrenzen ist, da in diesem Zustand der Riemenverschleiß maximal ist. Bei bisherigen Lösungen kann - wie oben dargestellt - der auftretende Schlupf lediglich durch Nachstellungen am Schwenklager des Drehstrom-Generators oder an durch Nachstellungen der den Riemenrücken jeweils vorspannenden Spannrollen vorgenommen werden, entweder beim Werkstattaufenthalt oder durch Selbsthilfe des Fahrers, vorausgesetzt passendes, Werkzeug ist zur Hand. Darüber hinaus ist aus dem Dokument JP 10 094295 A ein Verfahren zur Erkennung von Schlupf im Antrieb von Drehstrom-Generatoren bekannt. Dabei wird bei Erkennung von Schlupf an einer Vergleichsstufe, welcher drehzahlabhängige Eingangsgrößen zugeführt werden, ein Signal generiert und über eine Regelung die Generatorausgangsleistung angepasst.

Darstellung der Erfindung

Mittels des erfindungsgemäß vorgeschlagenen Verfahrens läßt sich die Lebensdauer eines Riementriebes entscheidend verlängern und die bei Schlupf zwischen dem Riemen und der den Drehstrom-Generator antreibenden Riemenscheibe auftretende hohe Geräuschentwicklung zuverlässig vermeiden. Dies wird dadurch erzielt, daß die Generatorausgangsleistung während einer Betriebsphase des Kraftfahrzeuges, die zum Beispiel durch eine hohe Drehzahldynamik gekennzeichnet ist, reduziert wird und dadurch das an der Antriebsseite des Drehstrom-Generators aufzubringende Antriebsdrehmoment sinkt. Daneben wird über die Drehstrom-Generatorregelung die Generatorausgangsleistung reduziert, wenn der aktuelle Wert des Schlupfes s dem maximal zulässigen Schlupfwert $s_{max}$ übersteigt.

Wird aktueller, den Maximal-Schlupfwert $s_{max}$ übersteigender Schlupf s erkannt, erfolgt eine erste Reduktion des maximal zulässigen Antriebsdrehmomentes des Drehstrom-Generators durch Begrenzung der Generatorausgangsleistung. Liegt während dieser Betriebsphase zusätzlich eine Beschleunigungsphase der Verbrennungskraftmaschine vor, nimmt deren Drehzahl mithin stark zu, kann durch eine weitere Begrenzungsstufe das in der ersten Begrenzungsstufe ermittelte maximal zulässige, reduzierte Antriebsmoment für den Drehstrom-Generator nochmals reduziert werden. Dies wirkt vor allem einer in Beschleunigungsphasen auftretenden als sehr unangenehm empfundenen Geräuschentwicklung bei durchrutschendem Riemen entgegen.

Das aufgetretene Ereignis, das durch Schlupf bewirkte Durchrutschen des Antriebsriemen des Drehstrom-Generators in Fahrzeugen, kann durch Eintrag in einem Fehlerspeicher dokumentiert werden. Daneben kann dieses Ereignis dem Fahrzeugführer durch eine Anzeige in der Instrumententafel angezeigt werden.

Neben einer Reduktion der Generatorausgangsleistung in Phasen hoher Drehzahldynamik auf eine Ausgangsleistung, die die Versorgung aller Verbraucher im Kraftfahrzeug gerade sicherstellt, kann über das Zustandsbit die Generatorausgangsleistung über den kompletten Fahrzyklus - zum Beispiel eine Langstreckenfahrt - so begrenzt werden, daß die verbleibende Restlebensdauer des Riemens erhöht wird, bis Abhilfe geschaffen werden kann.

Mit dem erfindungsgemäß vorgeschlagenen Verfahren kann einer gemäß regelmäßig erstellten Pannenstatistiken häufig auftretenden Pannenursache - nämlich gerissene Keilriemen - vorgebeugt werden, da mittels eines Riementriebes in der Regel mehrere Anbaukomponenten an Verbrennungskraftmaschinen wie zum Beispiel Ventilatoren, Wasserpumpe, Lenkhilfepumpe und dgl. angetrieben werden.

Zeichnung

Anhand der Zeichnung wird die Erfindung nachstehend näher erläutert.

Es zeigt:

Figur 1    die Generierung eines Zustandsbits, welches das Auftreten von Schlupf anzeigt und weiter verarbeitet werden kann,

Figur 2    die Weiterverarbeitung des generierten Zustandsbits, welches Schlupf anzeigt als Eingangssignal für eine Begrenzung des Antriebsmomentes des Drehstrom-Generators.

Ausführungsvarianten

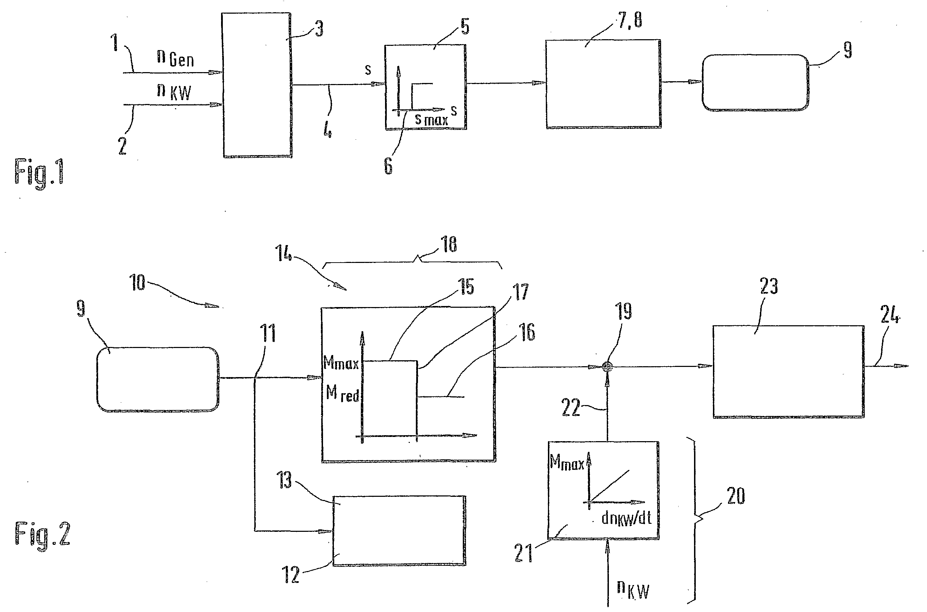

Fig. 1 zeigt die Generierung eines Zustandsbits, welches das Auftreten von Schlupf anzeigt und welches weiterverarbeitbar ist.

Wie der Darstellung gemäß Fig. 1 entnehmbar ist, werden einer Vergleicherstufe 3 zwei Eingangsgrößen 1, 2 zugeführt. Die Eingangsgröße 1 repräsentiert die Drehzahl des Drehstrom-Generators $n_{Gen}$. Die Eingangsgröße 2 repräsentiert die aktuelle Kurbelwellendrehzahl $n_{Kw}$ der Verbrennungskraftmaschine, welche den Drehstrom-Generator antreibt. Die Eingangsgröße 2 wird von einer Kommunikationsschnittstelle der Fahrzeugelektronik abgegriffen und wird zyklisch durch einen Drehzahlgeber abgegriffen, so daß der an Vergleichsstufe 3 anstehende aktuelle Wert der Drehzahl der Verbrennungskraftmaschine stets auf dem neuesten Stand ist. In der hier gemäß Fig. 1 nur schematisch wiedergegebenen Vergleichsstufe erfolgt die Berechnung des tatsächlichen aktuellen Schlupfwertes 4 s anhand der Beziehung:

$$\frac{(n_{KW} \cdot \ddot{u} - n_{Gen})}{n_{KW} \cdot \ddot{u}} = s$$

mit ü = Riemenübersetzung

Der in der Vergleichsstufe 3 ermittelt Ausgangswert für den aktuellen Schlupf 4 s, der anhand der vorstehend aufgeführten Beziehung ermittelt wurde, wird einer Schwellwertstufe 5 zugeleitet. Innerhalb der Schwellwertstufe 5 ist ein frei vorgebbarer Maximal-Schlupfwert $S_{max}$ abgelegt. In der Schwellwertstufe 5 kann ermittelt werden, ob die von der Vergleichsstufe 3 kontinuierlich übermittelten Werte für den aktuellen Schlupf 4 s oberhalb des in der Schwellwertstufe 5 abgelegten maximal zulässigen Schlupfwertes $S_{max}$ liegen oder nicht.

Überschreitet der aktuell ermittelte Wert des Schlupfes 4 s den in der Schwellwertstufe 5 abgelegten Maximal-Schlupfwert $S_{max}$, wird dieser Wert in einer Plausibilisierungs- und Filterumgsstufe 7, 8 auf seine Plausibilität hin untersucht und zeitlich gefiltert. Nach Passage der Plausibilisierungs- und Filterungsstufe 7, 8 stellt deren Ausgangsgröße ein Zustandsbit dar, welches das Ereignis "aufgetretener, den maximal zulässigen Schlupfwert $S_{max}$ überschreitender aktueller Schlupf 4 s liegt vor" festhält. Dieses Zustandsbit 9 kann in einen Fehlerspeicher eingetragen werden.

Der Darstellung gemäß Fig. 2 ist die Weiterverarbeitung des generierten Zustandsbits für aktuell auftretenden Schlupf entnehmbar, welches als Auslösungssignal für eine Begrenzung des Antriebsmomentes des Drehstrom-Generators genutzt wird.

Das Zustandsbit 9 wird vor seiner Übertragung in eine erste Begrenzungsstufe für das Antriebsmoment des Drehstromgenerators an einer Verzweigung 11 abgegriffen und als Fehlereintrag 13 in einen Fehlerspeicher 12 eingelesen. Der Fehlerspeicher 12 kann seinerseits über ein Diagnosegerät in einer Werkstatt ausgelesen werden, wo die nötigen Maßnahmen zur Abhilfe des unzulässig hohen sich einstellenden Schlupfes im Riementrieb getroffen werden können. Daneben ist es auch möglich, das Auftreten unzulässig hohen Schlupfes durch Nutzung des Zustandsbits 9 in einer Anzeige in der Instrumententafel des Fahrzeuges dem Fahrer anzuzeigen, so daß dieser unter Umständen selbst für Abhilfe sorgen kann.

In einer ersten Begrenzungsstufe 18 zur Begrenzung des Antriebsmoment des Drehstrom-Generators erfolgt eine Drehmomentbegrenzung 14 vom maximalen Drehmoment 15 auf ein reduziertes Drehmoment 16. Der Übergang vom Maximalmoment 15 auf reduziertes Moment 16 ist in der Darstellung gemäß Fig. 2 durch einen Momentensprung ΔM angedeutet. Dieser Momentensprung wird durch das Zustandsbits 9 ausgelöst, so daß durch die erste Begrenzungsstufe 18 für das Antriebsmoment des Drehstrom-Generators an einem der Drehmomentbegrenzung 14 nachgeordneten Summationspunkt 19 eine Größe ansteht, die ein reduziertes Drehmoment 16 für den Antrieb des Drehstrom-Generators darstellt.

Die am Summationspunkt 19 hinter der ersten Begrenzungsstufe 18 anstehende Ausgangsgröße stellt einen Wert für das reduzierte Drehmoment 16 dar, mit welchem der Drehstrom-Generator bei Überschreitung des maximalen Schlupfwertes 6 $S_{max}$ angetrieben werden kann, so daß der aktuelle Schlupfwert 4 s unter den maximalen Schlupfwert 6 $S_{max}$ abfällt. Mit Bezugszeichen 20 ist eine Begrenzungsstufe gekennzeichnet, deren Ausgangsgröße 22 vorzeichenbehaftet auf den erwähnten Summationspunkt 19 geschaltet ist. Mittels der zweiten Begrenzungsstufe 20 läßt sich die ausgangsseitig an der ersten Begrenzungsstufe 18 dem Summationspunkt 19 zugeführte Größe, die dem reduzierten Antriebsmoment 16 des Drehstrom-Generators entspricht nochmals reduzieren. Eingangsseitig ist die zweite Begrenzungsstufe 20 durch die die aktuelle Drehzahl 2 der Verbrennungskraftmaschine repräsentierende Eingangsgröße 2 $n_{KW}$ beaufschlagt. In der zweiten Begrenzungsstufe 20 erfolgt eine Auswertung der jeweils aktuellen Drehzahl 2 der Verbrennungskraftmaschine dahingehend, daß eine Beschleunigungsphase, in der sich ein Durchrutschen des Keilriemens am Drehstrom-Generator durch ein lautes Quietschgeräusch bemerkbar macht, erfaßt wird. Dazu wird die Eingangsgröße 2, welche die aktuelle Drehzahl der Verbrennungskraftmaschine repräsentiert, zeitlich differenziert und eine Eingangsgröße 22 generiert, welche mit negativem Vorzeichen behaftet auf den erwähnten Summationspunkt 19 aufgeschaltet wird. Die Eingangsgröße der zweiten Begrenzungsstufe 20 stellt eine Größe dar, um welche das Antriebsmoment des Drehstrom-Generators weiter reduziert werden muß, um in diesem ungünstigen Betriebszustand und Durchrutschen des mit Schlupf behafteten Riemens am Drehstrom-Generator zu vermeiden. Mittels der zweiten Begrenzungsstufe 20 wird dem Zusammentreffen von ungünstigsten Betriebsumständen dahingehend Rechnung getragen, daß sowohl das Auftreten von aktuellem Schlupf 4 s an sich, als auch das Drehzahlverhalten der Verbrennungskraftmaschine während einer Beschleunigungsphase bei der Ermittlung des maximal zulässigen Antriebsmomentes für den Drehstrom-Generator am Summationspunkt 19 durch entsprechende Anteile Berücksichtigung findet.

Am Summationspunkt 19 steht damit ein über die erste Begrenzungsstufe 18 und die zweite Begrenzungsstufe 20 reduzierte Größe für das Antriebsmoment des Drehstrom-Generators an, welches als Eingangsgröße einer Regelung 23 des Drehstrom-Generators zugeführt werden kann. Anhand dieses Eingangswertes, eine ein- bzw. zweifach reduzierte Antriebsmomentengröße darstellen, kann die Generatorausgangsleistung begrenzt werden und das übertragbare Antriebsmoment, übertragen durch den Riementrieb angepaßt werden. Dadurch läßt sich einerseits das zu übertragende Antriebsmoment an die Lebensdauer des mit Schlupf behafteten Riemens anpassen, so daß die Lebensdauer des Riemens verlängert werden kann, andererseits läßt sich durch das erfindungsgemäß vorgeschlagene Verfahren die Geräuschentwicklung, verursacht durch an der Riemenscheibe durchrutschende Riemen, seien es Flankenoffene Riemen oder mit Keilrippen profilierten Riemen vermeiden. Eine Limitierung der Generatorausgangsleitung kann aktiviert werden, ist jedoch nicht unbedingt erforderlich, da die im Kraftfahrzeug benötigten elektrischen Komponenten kurzzeitig aus der im Kraftfahrzeug vorhandenen Autobatterie versorgt werden können.

Bezugszeichenliste

| | |
|---|---|
| 1 | Eingangsgröße Generatordrehzahl $n_{Gen}$ |
| 2 | Eingangsgröße Kurbelwellendrehzahl $n_{KW}$ |
| 3 | Vergleichsstufe |
| 4 | Ausgangsgröße Schlupf s |
| 5 | Schwellwertstufe |
| 5 | Maximal-Schlupfwert $S_{max}$ |
| 7 | Plausibilisierungsstufe |
| 8 | Filterungsstufe |
| 9 | Ausgangsgröße Zustandsbit |
| 10 | Signal Weiterverarbeitung |
| 11 | Verzweigung |
| 12 | Fehlerspeicher |
| 13 | Fehlereintrag |
| 14 | Drehmomentbegrenzung |
| 15 | Maximaldrehmoment |
| 16 | reduziertes Drehmoment |
| 17 | Momentensprung ΔM |
| 18 | erste Begrenzungsstufe |
| 19 | Summationspunkt |
| 20 | zweite Begrenzungsstufe |
| 21 | Auswertungsstufe Beschleunigung d $n_{KW}$/dt |
| 22 | Ausgangsgröße |
| 23 | Regelung Drehstrom-Generator auf reduziertes Antriebsmoment |
| 24 | reduzierte Ausgangsleistung |

**Patentansprüche**

1. Verfahren zur Erkennung von Schlupf (4) im Antrieb von Drehstrom-Generatoren, die mit einer elektronischen Maschinensteuerung wie einem Pulswechselrichter oder einem Gleichrichter gesteuert werden und bei denen das Antriebsmoment von einer Verbrennungskraftmaschine an den Drehstrom-Generator über einen Riementrieb übertragen wird, **dadurch gekennzeichnet, daß** bei Erkennung von Schlupf (4, s) an einer Vergleichsstufe (3), welcher drehzahlabhängige Eingangsgrößen (1,2) zugeführt werden, ein Signal (9) generiert wird, so daß in einer Drehmomentbegrenzungsstufe (18, 20) das maximal übertragbare Antriebsmoment bestimmt wird, an welche über eine Regelung (23) die Generatorausgangsleistung angepaßt wird, wobei abhängig vom Signal (9) in einer ersten Drehzahlbegrenzungsstufe (18) das maximal zulässige Drehmoment (15) auf ein reduziertes Drehmoment (16) gesetzt wird und während einer Beschleunigungsphase der Verbrennungskraftmaschine $\left(\frac{d\,n_{KW}}{dt}\right) > 0$ das reduzierte Drehmoment (16) durch eine zweite Begrenzungsstufe (20) zusätzlich begrenzt wird.

**2.** Verfahren gemäß Anspruch 1, **dadurch gekennzeichnet, daß** die Eingangsgrößen die Generatordrehzahl (1) $n_{Gen}$ und die Drehzahl der Kurbelwelle der Verbrennungskraftmaschine (2) $n_{KW}$ sind.

**3.** Verfahren gemäß Anspruch 2, **dadurch gekennzeichnet, daß** der Schlupf (4, s) in der Vergleichsstufe (3) gemäß der Beziehung

$$\frac{(n_{KW} \cdot \ddot{u} - n_{Gen})}{n_{KW} \cdot \ddot{u}} = s$$

mit ü = Riemenübersetzung
ermittelt wird.

**4.** Verfahren gemäß Anspruch 1, **dadurch gekennzeichnet, daß** der aktuelle Schlupfwert (4, s) auf Überschreiten eines maximal zulässigen, voreinstellbaren Schlupfwertes (6, $s_{max}$) überprüft wird.

**5.** Verfahren gemäß Anspruch 4, **dadurch gekennzeichnet, daß** bei Überschreiten des maximal zulässigen Schlupfwertes (6, $s_{max}$) der ermittelte aktuelle Schlupf (4, s) zeitlich gefiltert und auf Plausibilität überprüft und als Signal ein Zustandsbit (9) gesetzt wird.

**6.** Verfahren gemäß Anspruch 5, **dadurch gekennzeichnet, daß** das Zustandsbit (9) als Fehlereintrag (13) in einen Fehlerspeicher (12) eingetragen wird, der über eine Diagnoseeinheit auslesbar ist.

**7.** Verfahren gemäß Anspruch 1, **dadurch gekennzeichnet, daß** die Ausgangsgröße (16) der ersten Drehmomentbegrenzungsstufe (18) und die Ausgangsgröße (22) der zweiten Drehmomentbegrenzungsstufe (20) an einem Summationspunkt (19) zusammengeführt werden.

**8.** Verfahren gemäß Anspruch 7, **dadurch gekennzeichnet, daß** die Ausgangsgröße (16) und die Ausgangsgröße (22) am Summationspunkt (19) vorzeichenbehaftet addiert werden.

**9.** Verfahren gemäß Anspruch 7, **dadurch gekennzeichnet, daß** die am Summationspunkt (19) resultierende Größe das reduzierte, maximal zulässige Antriebsmoment des Drehstrom-Generators darstellt, an welches die Generatorausgangsleistung über eine Regelung (23) angepaßt wird.

**Claims**

**1.** Method for detecting slip (4) in the drive of three-phase generators which are controlled with an electronic machine controller such as a pulse width modulated inverter or a rectifier, and in which the drive torque is transmitted from an internal combustion engine to the three-phase generator via a belt drive, **characterized in that** when slip (4, s) is detected at a comparative stage (3), to which rotational-speed-dependent input variables (1, 2) are fed, a signal (9) is generated, with the result that the maximum transmissible drive torque is determined in a torque-limiting stage (18, 20) to which the generator output power is adapted by means of a closed-loop controller (23), wherein depending on the signal (9) in a first rotational-speed-limiting stage (18) the maximum permissible torque (15) is set to a reduced torque (16), and during an acceleration phase of the internal combustion engine

$$\left( \frac{d\, n_{KW}}{dt} \right) > 0 \quad \text{the reduced torque (16) is additionally limited by a second limiting stage (20).}$$

**2.** Method according to Claim 1, **characterized in that** the input variables are the generator rotational speed (1) $n_{Gen}$ and the rotational speed of the crankshaft of the internal combustion engine (2) $n_{KW}$.

**3.** Method according to Claim 2, **characterized in that** the slip (4, s) in the comparative stage (3) is determined according to the relationship

$$\frac{(n_{KW} \cdot \ddot{u} - n_{Gen})}{n_{KW} \cdot \ddot{u}} = s$$

where ü = belt transmission ratio.

**4.** Method according to Claim 1, **characterized in that** the current slip value (4, s) is checked for the exceeding of a maximum permissible presettable slip value (6, $s_{max}$).

**5.** Method according to Claim 4, **characterized in that** if the maximum permissible slip value (6, $s_{max}$) is exceeded, the determined current slip (4, s) is filtered chronologically and its plausibility checked, and a status bit (9) is set as a signal.

**6.** Method according to Claim 5, **characterized in that** the status bit (9) is input as an error entry (13) into an error memory (12) which can be read out via a diagnostic unit.

**7.** Method according to Claim 1, **characterized in that** the output variable (16) of the first torque-limiting stage (18) and the output variable (22) of the second torque-limiting stage (20) are combined at a summing point (19).

**8.** Method according to Claim 7, **characterized in that** the output variable (16) and the output variable (22) are added in a signed fashion at the summing point (19).

9. Method according to Claim 7, **characterized in that** the value resulting at the summing point (19) represents the reduced, maximum permissible drive torque of the three-phase generator to which the generator output power is adapted by means of a closed-loop controller (23).

**Revendications**

1. Procédé pour détecter le glissement (4) dans l'entraînement de générateurs à courant triphasé, qui sont commandés avec une commande de machine électronique, comme un onduleur à impulsions ou un redresseur et dans lesquels le couple d'entraînement est transmis d'une machine à combustion interne au générateur à courant triphasé par une transmission à courroie, **caractérisé en ce que**, lors de la détection de glissement (4, s) à un étage de comparaison (3), auquel on fournit des grandeurs d'entrée (1, 2) dépendant de la vitesse de rotation, on génère un signal (9), de telle manière que l'on détermine dans un étage de limitation de couple moteur (18, 20) le couple d'entraînement maximal transmissible, auquel la puissance de sortie du générateur est adaptée au moyen d'une régulation (23), dans lequel, en fonction du signal (9), on pose dans un premier étage de limitation de la vitesse de rotation (18) le couple moteur maximal admissible (15) à un couple moteur réduit (16) et pendant une phase d'accélération de la machine à combustion interne $\left(\dfrac{d\,n_{KW}}{dt}\right) > 0$ on limite en outre le couple moteur réduit (16) par un deuxième étage de limitation (20).

2. Procédé selon la revendication 1, **caractérisé en ce que** les grandeurs d'entrée sont la vitesse de rotation du générateur (1) $n_{Gen}$ et la vitesse de rotation du vilebrequin de la machine à combustion interne (2) $n_{KW}$.

3. Procédé selon la revendication 2, **caractérisé en ce que** l'on détermine le glissement (4, s) dans l'étage de comparaison (3) selon l'équation

$$\frac{(n_{KW} \cdot \ddot{u} - n_{Gen})}{n_{KW} \cdot \ddot{u}} = s$$

dans laquelle ü est le rapport de transmission de la courroie.

4. Procédé selon la revendication 1, **caractérisé en ce que** l'on contrôle la valeur de glissement actuelle (4, s) quant au dépassement d'une valeur de glissement maximal admissible préréglable (6, $s_{max}$).

5. Procédé selon la revendication 4, **caractérisé en ce qu'**en cas de dépassement de la valeur de glissement maximal admissible (6, $s_{max}$), on filtre temporellement le glissement actuel déterminé (4, s), on contrôle sa plausibilité et on pose comme signal un caractère d'état (9).

6. Procédé selon la revendication 5, **caractérisé en ce que** l'on introduit le caractère d'état (9) comme entrée de défaut (13) dans une mémoire de défaut (12), qui peut être lue par une unité de diagnostic.

7. Procédé selon la revendication 1, **caractérisé en ce que** l'on réunit en un point de sommation (19) la grandeur de sortie (16) du premier étage de limitation de couple moteur (18) et la grandeur de sortie (22) du deuxième étage de limitation de couple moteur (20).

8. Procédé selon la revendication 7, **caractérisé en ce que** l'on additionne avec leur signe la grandeur de sortie (16) et la grandeur de sortie (22) au point de sommation (19).

9. Procédé selon la revendication 7, **caractérisé en ce que** la grandeur résultante au point de sommation (19) représente le couple d'entraînement maximal admissible réduit du générateur à courant triphasé, auquel la puissance de sortie du générateur est adaptée au moyen d'une régulation (23).

Fig. 1

Fig. 2

7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- JP 10094295 A